# EUROPÄISCHE PATENTSCHRIFT

(11) **EP 3 441 225 B1**
(45) Veröffentlichungstag und Bekanntmachung des Hinweises auf die Patenterteilung: **25.09.2019**
(21) Anmeldenummer: 18198752.0
(22) Anmeldetag: 05.05.2017
(51) Int. Cl.: B41F 17/00, B41F 13/00, F16M 7/00

(54) **MASCHINENGESTELL**
TAMPON PRINTING MACHINE FRAME
BÂTI DE MACHINE À IMPRIMER AU TAMPON

(30) Priorität: 30.05.2016 DE 102016109929
(43) Veröffentlichungstag der Anmeldung: 13.02.2019
(62) Teilanmeldung aus: 17169784.0
(73) Patentinhaber: Tampoprint AG, 70825 Korntal-Münchingen (DE)
(72) Erfinder: NITSCHKE, Oliver, 71735 Eberdingen (DE)
(74) Vertreter: DREISS Patentanwälte PartG mbB

(56) Entgegenhaltungen:
- DE-A1- 3 926 146
- DE-U1- 29 605 123
- GB-A- 736 312

## Beschreibung

Die Erfindung betrifft ein Maschinengestell, wobei das Maschinengestell mehrere Stabelemente und wenigstens ein, vorzugsweise plattenartig ausgebildetes Trägerelement umfasst, wobei die Stabelemente mittels jeweils einer Verbindungseinrichtung mit dem Trägerelement verbindbar sind, um in einem Montagezustand das Maschinengestell zu bilden. Das Trägerelement ist bei herkömmlichen Maschinengestellen nicht in einfacher Weise mit den Stabelementen verbindbar. Hierzu sind aus dem Stand der Technik lediglich komplexe Verbindungseinrichtungen bekannt, die zwar eine lagegenaue Anbringung des Trägerelements an den Stabelementen ermöglichen, jedoch nicht einfach in ihrer Bedienung sind. Unter einer Öffnung ist vorliegend ein im Trägerelement liegender materialfreier Raum gemeint, der komplett durch Material des Trägerelements umschlossen ist. Unter einer Ausnehmung ist dabei ein materialfreier Raum im Trägerelement zu verstehen, welcher in eine Schmalseite des Trägerelements mündet. Dokument DE-U-296 05 123 offenbart ein Maschinengestell gemäß Oberbegriff von Anspruch 1.

Aufgabe der vorliegenden Erfindung ist es, ein Maschinengestell bereitzustellen, bei welcher das Trägerelement in einfacher Weise mit den Stabelementen verbindbar ist, um das Maschinengestell in dem Montagezustand zu bilden. Wobei die Verbindung nicht nur einfach zu handhaben sein soll, sondern ebenso eine genaue Positionierung des Trägerelements an den Stabelementen ermöglicht.

Diese Aufgabe wird durch ein Maschinengestell mit den Merkmalen gemäß Anspruch 1 gelöst. Erfindungsgemäß umfasst die Verbindungseinrichtung wenigstens ein Spannelement, insbesondere in Form einer Spannschraube, ein Klemmelement und ein im Montagezustand als Klemmhülse wirkendes Manschettenelement, wobei die Verbindungseinrichtung in der Öffnung oder Ausnehmung des Trägerelements angeordnet ist, wobei das Manschettenelement flanschartig ausgebildet ist und mit einem äußeren Flanschabschnitt mit einer Anlagefläche axial gegen das Trägerelement anliegt, und wobei das Manschettenelement mit einem hülsenbildenden radial inneren Abschnitt den zylindrisch ausgebildeten Befestigungsabschnitt des Stabelements umgibt und im Montagezustand mit einer Kontaktfläche an den Befestigungsabschnitt klemmend anliegt, wobei in radialer Richtung zwischen dem Manschettenelement und einer die Öffnung oder Ausnehmung begrenzenden Wandung des Trägerelements ein, vorzugsweise ringförmiger, Spalt gebildet ist, der sich in axialer Richtung zu dem äußeren Flanschabschnitt des Manschettenelements hin keilförmig verjüngt, und wobei das Klemmelement in dem Spalt aufgenommen ist und durch Festziehen des Spannelements axial tiefer in den Spalt gezogen wird und hierdurch das Manschettenelement mit seiner Kontaktfläche nach radial innen gegen den Befestigungsabschnitt des Stabelements gepresst wird, wodurch in der Folge die Verbindungseinrichtung zwischen Stabelement und Trägerelement verspannt wird und damit auch das Stabelement klemmend gegen das Trägerelement fixiert wird.

Bevorzugt ist, wenn der Spalt sich in einem Winkel von 2° bis 10°, vorzugsweise 3° bis 8°, insbesondere 3,5° bis 6°, insbesondere 4° bis 5°, zur axialen Richtung verjüngt. Hierdurch wird ein vorteilhaftes Verhältnis von Bewegung des Klemmelements in den Spalt hinein und Verklemmung des Manschettenelements andererseits erreicht. Insbesondere ist bevorzugt, wenn die manschettenelementseitige Spannfläche und die Innenfläche des Klemmelements in einem Winkel von 2° bis 10°, vorzugsweise 3° bis 8°, insbesondere 3,5° bis 6°, insbesondere 4° bis 5°, zur axialen Richtung verlaufen und hierdurch die Verjüngung des Spalts wenigstens teilweise, insbesondere vollständig erzeugt ist.

Bei dem erfindungsgemäßen Maschinengestell kann eine Platzierung des Trägerelements über den äußeren Flanschabschnitt mit der Anlagefläche präzise erfolgen, wobei sich Ausrichtung und Lage des Trägerelements beim Festziehen des Spannelements nicht ändern, da das Klemmelement gegen das Manschettenelement und das Trägerelement jedoch nicht unmittelbar gegen das Stabelement verspannt wird. Bei dem vorliegenden Maschinengestell kann also vor dem Festziehen des Spannelements das Trägerelement zu dem Stabelement genau ausgerichtet werden und dann kann das Spannelement festgezogen werden, so dass die einzelnen Teile des Maschinengestells fest miteinander verbunden und verspannt, wobei sich bei diesem Festziehen die Ausrichtung und Lage des Trägerelements zum Stabelement nicht mehr ändert, so dass das Maschinengestell im Montagezustand exakt eingestellt ist.

Bevorzugt ist dabei, wenn der Flanschabschnitt kreisscheibenförmig ausgebildet ist. Hierdurch kann das Trägerelement, insbesondere wenn der Flanschabschnitt in einer Ausnehmung angeordnet ist, in vorteilhafter Weise entlang der gesamten Erstreckung des kreisscheibenförmigen Flanschabschnitts an diesen angelegt und damit genau positioniert werden.

Von Vorteil ist auch, wenn eine den Spalt begrenzende trägerelementseitige Spannfläche zylindrisch ausgebildet ist. Die Öffnung beziehungsweise Ausnehmung bei dieser Ausführungsform in einfacher Weise in das Trägerelement eingebracht werden, beispielsweise mittels eines Bohrers, da auch die trägerelementseitige Spannfläche in dieser Ausführungsform zylindrisch ausgebildet ist. Hierdurch lässt sich das Trägerelement in einfacher Weise fertigen.

Vorteilhaft ist auch, wenn das Klemmelement mit einer Außenfläche, die der Mantelfläche eines Kegelstumpfs oder eines Zylinders entspricht, an einer zur Außenfläche konzentrisch verlaufenden, den Spalt begrenzenden, trägerelementseitigen Spannfläche anliegt. Die Außenfläche des Klemmelements bei dieser Ausführungsform folgt damit dem Verlauf der trägerelementseitigen Spannfläche. Hierdurch kann ein Gleiten mit geringem Widerstand der trägerelementseitigen Spannfläche über die Außenfläche des Klemmelements gewährleistet werden. Damit verläuft das Ziehen des Klemmelements in den Spalt durch Festziehen des Spannelements in vorteilhafter und leichtgängiger Weise, da ein geringer Widerstand überwunden werden muss.

Von Vorteil ist auch, wenn das Klemmelement mit einer Innenfläche, die der Mantelfläche eines Kegelstumpfs oder eines Zylinders entspricht, an einer zur Innenfläche konzentrisch verlaufenden, den Spalt begrenzenden, manschettenelementseitigen Spannfläche anliegt. Hierdurch gleitet das Klemmelement beim Festziehen des Spannelements in vorteilhafter Weise über die manschettenelementseitige Spannfläche, ohne dass es zu einem Verhaken oder einem Klemmen kommen kann.

Von Vorteil ist auch, wenn das Manschettenelement und/oder das Klemmelement eine von innen nach außen, insbesondere radial verlaufende Spannfuge aufweist. Beim Hineinziehen des Klemmelements über das Spannelement in den Spalt wird das Manschettenelement genau wie das Klemmelement durch die Spannfuge in umfänglicher Richtung komprimierbar, was das Verspannen einfacher gestaltet und einen höheren Grad an Verspannung bei geringerer Spannkraft ermöglicht.

Vorteilhaft ist auch, wenn mehrere Spannelemente vorgesehen sind, hierdurch ist es möglich, dass das Klemmelement über seine umfängliche Erstreckung hinweg gleichmäßig in den Spalt gezogen wird, was die Genauigkeit der der Montage erhöht.

Vorteilhaft ist auch, wenn der Flanschabschnitt wenigstens eine Durchgangsöffnung aufweist, durch die sich das Spannelement im Montagezustand erstreckt. Dies stellt eine einfache Möglichkeit dar, das Spannelement mit dem Flanschabschnitt zu verbinden. Das Spannelement kann in dieser Ausführungsform in einfacher Weise durch die Durchgangsöffnung hindurchgeführt werden und liegt dann beispielsweise mit einem Schraubenkopf an dem Flanschabschnitt an, wobei ein dem Schraubenkopf gegenüberliegendes Ende des Spannelements in das Klemmelement eingreift.

Vorteilhaft ist auch, wenn das Klemmelement ein Loch, vorzugsweise ein Sackloch aufweist, in das das Spannelement im Montagezustand eingreift, vorzugsweise über ein verspannelementseitiges Gewinde in ein lochseitiges Gewinde eingreift. Hierdurch kann in einfacher Weise ein zuverlässiger Kontakt zwischen dem Klemmelement und dem Spannelement hergestellt werden, so dass das Klemmelement in einfacher Weise in den Spalt ziehbar ist.

Vorteilhaft ist auch, wenn das Trägerelement eine flächige Erstreckung aufweist, die orthogonal zu einer Erstreckung des Stabelements ist. Dies stellt eine einfach zu realisierende Ausführungsform dar, die für eine Vielzahl von Anwendungen des Maschinengestells geeignet ist.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die beschriebenen Merkmale sowohl in Alleinstellung als auch in unterschiedlichen Kombinationen für die Erfindung wichtig sein können, ohne dass hierauf nochmals explizit hingewiesen wird. Es zeigen:
- Figur 1: ein erfindungsgemäßes Maschinengestell in einer perspektivischen Darstellung;

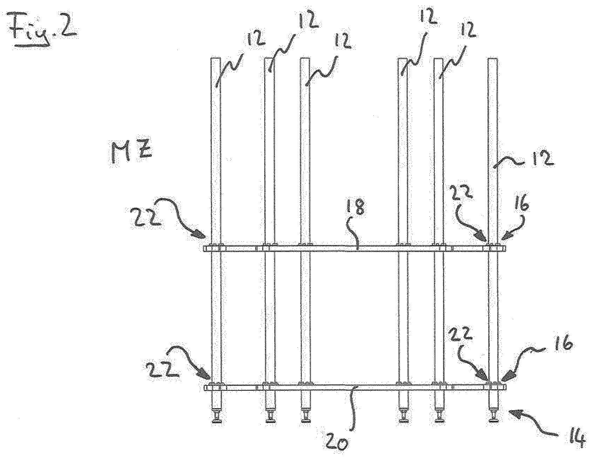

- Figur 2: das Maschinengestell aus Figur 1 in einer Seitenansicht;
- Figur 3: einen vergrößerten Ausschnitt aus Figur 1 um eine Verbindungseinrichtung herum in einer perspektivischen Darstellung;
- Figur 4: eine weitere Darstellung des Bereichs aus Figur 3 um eine Verbindungseinrichtung herum;
- Figur 5: die Verbindungseinrichtung aus Figur 4 in explosionsartiger Darstellung; und
- Figur 6: eine Schnittdarstellung gemäß Pfeil VI in Fig. 4.

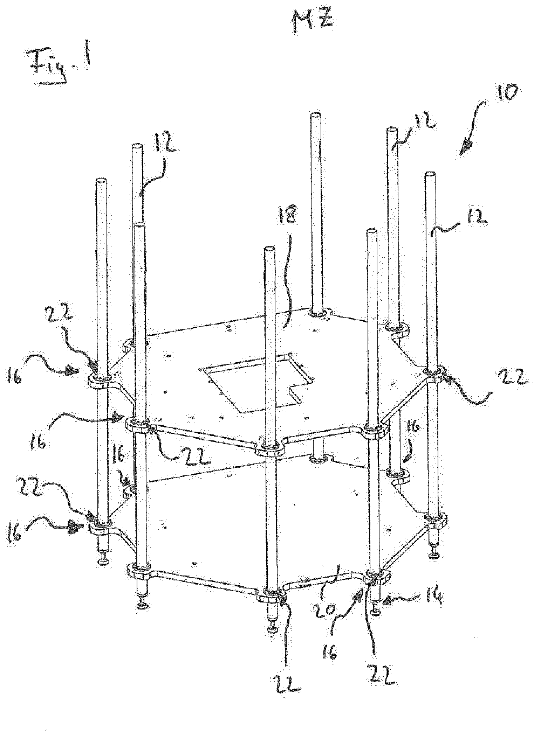

Ein Maschinengestell trägt in Figur 1 insgesamt das Bezugszeichen 10 und umfasst mehrere Stabelemente 12, die insgesamt bis auf einen jeweiligen Fußabschnitt 14 zylindrisch ausgebildet sind. Jedes der Stabelemente 12 umfasst jeweils zwei ebenfalls zylindrisch ausgebildete Befestigungsabschnitte 16. Über die Befestigungsabschnitte 16 sind die Stabelemente 12 jeweils mit einem ersten Trägerelement 18 und einem zweiten Trägerelement 20 über jeweils eine Verbindungseinrichtung 22, verbunden. In dem in Figur 1 gezeigten Zustand, in dem die Stabelemente 12 mit dem ersten Trägerelement 18 und mit dem zweiten Trägerelement 20 über die Verbindungseinrichtung 22 verbunden sind, befinden diese sich in einem Montagezustand, indem sie das Maschinengestell 10 bilden.

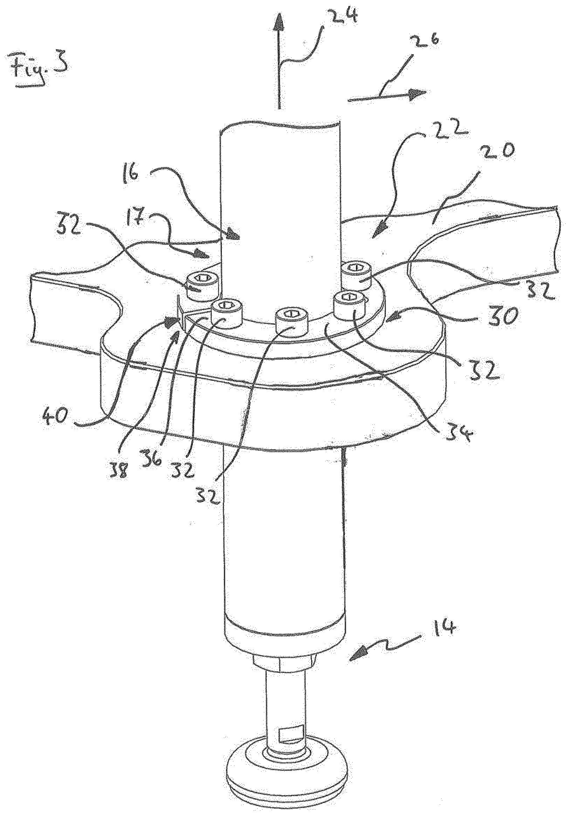

In Figur 3 ist ein Bereich um eine Verbindungseinrichtung 22 vereinzelt und im Detail dargestellt. Eine axiale Richtung 24 ist durch einen Pfeil mit dem entsprechenden Bezugszeichen dargestellt, genau wie eine radiale Richtung 26. Dabei beziehen sich die axiale Richtung 24 und die radiale Richtung jeweils auf die in der Figur 3 dargestellten Stabelemente 12.

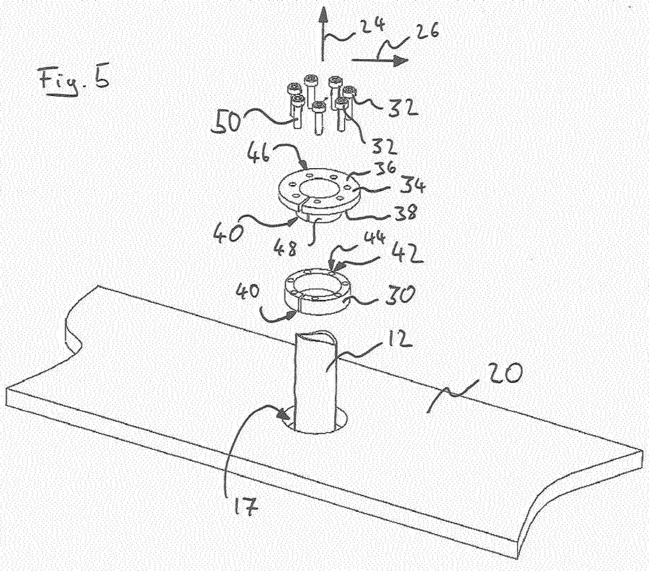

Die Verbindungseinrichtung 22 aus Figur 3 umfasst ein in Figur 5 im Schnitt gezeigtes Klemmelement 30, welches in der Darstellung von Figur 3 in einer Öffnung 17 des Trägerelements 20 angeordnet ist. Die Verbindungseinrichtung 22 umfasst des Weiteren mehrere Spannelemente 32, die als Spannschrauben 33 ausgeführt sind. Des Weiteren umfasst die Verbindungseinrichtung 22 ein Manschettenelement 34, das flanschartig ausgebildet ist und einen äußeren Flanschabschnitt 36 aufweist. Ein äußerer Flanschabschnitt 36 liegt mit einer Anlagefläche 38 axial gegen das Trägerelement 20 an. In dem in Figur 3 gezeigten Montagezustand bildet das Manschettenelement 34 eine Klemmhülse in der Öffnung 17 des Trägerelements 20. Das Manschettenelement 34 weist eine Spannfuge 40 auf, die in Figur 3 gut sichtbar dargestellt ist.

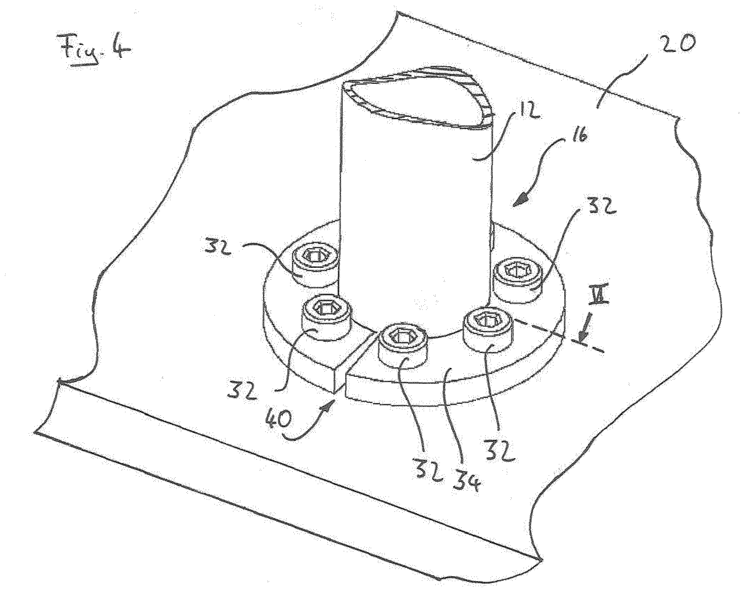

In Figur 5 ist der Abschnitt aus den Figuren 3 und 4 während der Montage der Verbindungseinrichtung dargestellt. In dieser Darstellung ist ersichtlich, dass auch das Klemmelement 30 eine Spannfuge 40 aufweist. Das Klemmelement 30 weist in der in Figur 5 gezeigten Ausführungsform außerdem fünf Sacklöcher 52 auf, welche jeweils ein lochseitiges Gewinde 44 tragen. In der Darstellung von Figur 5 ist auch die Struktur des Manschettenelements 34 gut erkennbar. Neben dem äußeren Flanschabschnitt 36, der mit den Sacklöchern 42 des Klemmelements fluchtende Durchgangsöffnungen 46 aufweist, umfasst das Manschettenelement auch einen hülsenbildenden radial inneren Abschnitt 48. Die Spannfuge 40 erstreckt sich sowohl durch den äußeren Flanschabschnitt 36 wie auch durch den hülsenbildenden radial inneren Abschnitt 48.

Bei der Montage der Verbindungseinrichtung wird das Klemmelement 30 über das Stabelement 12 geführt und durch die Öffnung 17 hindurch. Danach wird das Manschettenelement 34 über das Stabelement 12 geführt und dann das Trägerelement 20 genau auf die gewünschte Position gebracht, wobei das Trägerelement 20 an der Anlagefläche 38 des äußeren Flanschabschnitts 36 angelegt wird. Die Spannelemente 32 werden durch die jeweiligen Durchgangsöffnungen 46 im Manschettenelement 34 geführt und dann das Klemmelement 30 derart positioniert, dass die Spannelemente 32 in die Sacklöcher 42 des Klemmelements 30 eingeführt werden und dort mit einem jeweiligen Schraubengewinde 50 in die lochseitigen Gewinde 44 der Sacklöcher 42 eingreifen.

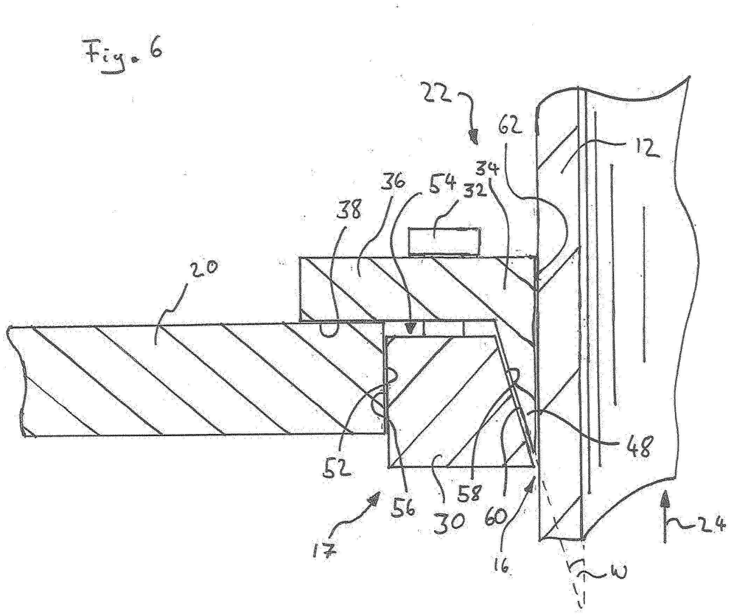

In der Darstellung von Figur 6 ist ersichtlich, dass in radialer Richtung 26 zwischen dem Manschettenelement 34 und einer die Öffnung 17 begrenzenden Wandung 52, welche gleichzeitig eine trägerelementseitige Spannfläche 52 bildet, ein Spalt 54 gebildet ist, der vorliegend ringförmig und in Umfangsrichtung durchgehend ausgebildet ist. Der Spalt 54 verjüngt sich dabei keilförmig in axialer Richtung 24 zu dem äußeren Flanschabschnitt 36 des Manschettenelements 34 hin. Das Klemmelement 30 ist in dem Spalt 54 aufgenommen. Das Klemmelement 30 liegt mit einer Außenfläche 56, die der Mantelfläche eines Zylinders entspricht, an der zu der Außenfläche 56 konzentrisch verlaufenden, den Spalt 54 begrenzenden trägerelementseitigen Spannfläche 52 an. Mit einer Innenfläche 58, die der Mantelfläche eines Kegelstumpfs entspricht, liegt das Klemmelement 30 an einer zur Innenfläche 58 konzentrisch verlaufenden, den Spalt 54 begrenzenden, manschettenelementseitigen Spannfläche 60 an.

Der Spalt 54 verjüngt sich in einem Winkel w, der in der Darstellung von Figur 6 zur Verdeutlichung der Funktionsweise übertrieben dargestellt ist. Winkel w beträgt im Sinne der Erfindung vorzugsweise 2° bis 10°, vorzugsweise 3° bis 8°, insbesondere 3,5° bis 6°, insbesondere 4° bis 5°, ggü der axialen Richtung 24. Hierdurch wird ein vorteilhaftes Verhältnis von Bewegung des Klemmelements 30 in den Spalt 54 hinein und Verklemmung des Manschettenelements 34 andererseits erreicht. Vorliegend ist die Verjüngung des Spalts vollständig durch den Verlauf der manschettenelementseitigen Spannfläche 60 und der Innenfläche 58 des Klemmelements 30 im Winkel W verursacht, da die trägerelementseitige Spannfläche 52 und die Außenfläche 56 des Klemmelements 30 gegenüber der axialen Richtung 24 nicht abgewinkelt verlaufen.

Nachfolgend wird die Montage des Trägerelements 20 über die Verbindungseinrichtung 22 anhand der Figur 6 näher beschrieben. In dem in Figur 6 gezeigten Zustand, in dem das Klemmelement 30 in dem Spalt 54 aufgenommen ist, wird durch Festziehen des Spannelements 32 das Klemmelement 30 axial tiefer in den Spalt 54 gezogen, da das Gewinde 50 des Spannelements 32 in das Gewinde 44 im Sackloch 42 des Klemmelements 30 eingreift. Durch das Ziehen des Klemmelements in den Spalt 54 wird das Manschettenelement 34 mit seiner Kontaktfläche 62 nach radial innen, also entgegen der radialen Richtung 26, gegen den Befestigungsabschnitt 16 des Stabelements 12 gepresst.

Hierdurch wird die Verbindungseinrichtung 22 zwischen dem Stabelement 12 und dem Trägerelement 20 verspannt und damit auch das Stabelement 12 klemmend gegen das Trägerelement 20 fixiert. Vorteilhaft ist dabei, dass indem dass indem das Klemmelement 30 beim Verspannen im Spalt 54 nur gegen das Trägerelement 20 und das Manschettenelement 34 jedoch nicht gegen das Stabelement 12 gleitet, so dass sich die relative Position von Trägerelement 20, Manschettenelement 34 und Stabelement 12 nicht ändert.

Beim Festziehen der Verbindungseinrichtung 22 gleitet das Klemmelement 30 mit seiner Außenfläche 56 entlang der konzentrisch zur Außenfläche 56 verlaufenden trägerelementseitigen Spannfläche 52 und mit seiner Innenfläche 58 entlang der manschettenelementseitigen Spannfläche 60, welche ebenfalls konzentrisch zur Innenfläche 58 verläuft. Da sich der Spalt 54 zum Flanschabschnitt 36 hin verjüngt, wird der Spalt 54 durch das Hineinziehen des Klemmelements quasi aufgeweitet und hierdurch die Kontaktfläche des Manschettenelements 34 gegen den Befestigungsabschnitt 16 des Stabelements 12 gepresst, und gleichzeitig wird die Außenfläche 56 des Klemmelements gegen die trägerelementseitige Spannfläche 52, welche den Spalt 54 begrenzt, gepresst.

## Patentansprüche

1. Maschinengestell (10), wobei das Maschinengestell (10) mehrere Stabelemente (12) mit einem zylindrisch ausgebildeten Befestigungsabschnitt (16) und wenigstens ein, vorzugsweise plattenartig ausgebildetes Trägerelement (18, 20) mit Öffnungen (17) oder Ausnehmungen für die Stabelemente (12) umfasst, wobei die Stabelemente (12) mittels jeweils einer Verbindungseinrichtung (22) in einer jeweiligen Öffnung (17) oder Ausnehmung mit dem Trägerelement (18, 20) verbindbar sind, um in einem Montagezustand (MS) das Maschinengestell (10) zu bilden, mit einer axialen Richtung (24) und einer radialen Richtung (26), **dadurch gekennzeichnet, dass** die Verbindungseinrichtung (22), wenigstens ein Spannelement (32), insbesondere in Form einer Spannschraube (32), ein Klemmelement (30) und ein im Montagezustand (MS) als Klemmhülse wirkendes Manschettenelement (34) umfasst und in der Öffnung (17) oder Ausnehmung des Trägerelements (18, 20) angeordnet ist, wobei das Manschettenelement (34) flanschartig ausgebildet ist und mit einem äußeren Flanschabschnitt (36) mit einer Anlagefläche (38) axial gegen das Trägerelement (18, 20) anliegt, und wobei das Manschettenelement (34) mit einem hülsenbildenden radial inneren Abschnitt (48) den zylindrisch ausgebildeten Befestigungsabschnitt (16) des Stabelements (12) umgibt und im Montagezustand (MS) mit einer Kontaktfläche (62) an dem Befestigungsabschnitt (16) klemmend anliegt, wobei in radialer Richtung (26) zwischen dem Manschettenelement (34) und einer die Öffnung (17) oder Ausnehmung begrenzenden Wandung (52) des Trägerelements (18, 20) ein, vorzugsweise ringförmiger, Spalt (54) gebildet ist, der sich in axialer Richtung (24) zu dem äußeren Flanschabschnitt (36) des Manschettenelements (34) hin keilförmig verjüngt, und wobei das Klemmelement (30) in dem Spalt (54) aufgenommen ist und durch Festziehen des Spannelements (32) axial tiefer in den Spalt (54) gezogen wird und hierdurch das Manschettenelement (34) mit seiner Kontaktfläche (62) nach radial innen gegen den Befestigungsabschnitt (16) des Stabelements (12) gepresst wird, wodurch in der Folge die Verbindungseinrichtung (22) zwischen Stabelement (12) und Trägerelement (18, 20) verspannt wird und damit auch das Stabelement (12) klemmend gegen das Trägerelement (18, 20) fixiert wird.

2. Maschinengestell (10) nach Anspruch 1, **dadurch gekennzeichnet, dass** der Flanschabschnitt (36) kreisscheibenförmig ausgebildet ist.

3. Maschinengestell (10) nach Anspruch 1 oder 2, **dadurch gekennzeichnet, dass** eine den Spalt (54) begrenzende trägerelementseitige Spannfläche (52) zylindrisch ausgebildet ist.

4. Maschinengestell (10) nach einem oder mehreren der vorangegangenen Ansprüche 1 bis 3, **dadurch gekennzeichnet, dass** das Klemmelement (30) mit einer Außenfläche (56), die der Mantelfläche eines Kegelstumpfs oder eines Zylinders entspricht, an einer zur Außenfläche (56) konzentrisch verlaufenden, den Spalt (54) begrenzenden, trägerelementseitigen Spannfläche (52) anliegt.

5. Maschinengestell (10) nach einem oder mehreren der vorangegangenen Ansprüche, **dadurch gekennzeichnet, dass** das Klemmelement (30) mit einer Innenfläche (58), die der Mantelfläche eines Kegelstumpfs oder eines Zylinders entspricht, an einer zur Innenfläche (58) konzentrisch verlaufenden, den Spalt (54) begrenzenden, manschettenelementseitigen Spannfläche (60) anliegt.

6. Maschinengestell (10) nach einem oder mehreren der vorangegangenen Ansprüche, **dadurch gekennzeichnet, dass** der Spalt (54) sich in einem Winkel (w) von 2° bis 10°, vorzugsweise 3° bis 8°, insbesondere 3,5° bis 6°, insbesondere 4° bis 5°, zu der axialen Richtung (24) verjüngt, vorzugsweise dass eine Innenfläche (58) des Klemmelements (30) und eine manschettenelementseitige Spannfläche (60) in einem Winkel (w) von 2° bis 10°, vorzugsweise 3° bis 8°, insbesondere 3,5° bis 6°, insbesondere 4° bis 5°, zu der axialen Richtung (24) verlaufen, wodurch die Verjüngung des Spalts (54) wenigstens teilweise, insbesondere vollständig verursacht ist.

7. Maschinengestell (10) nach einem oder mehreren der vorangegangenen Ansprüche, **dadurch gekennzeichnet, dass** das Manschettenelement (34) und/oder das Klemmelement (30) eine von innen nach außen verlaufende Spannfuge (40) aufweisen.

8. Maschinengestell (10) nach einem oder mehreren der vorangegangenen Ansprüche, **dadurch gekennzeichnet, dass** sie mehrere Spannelemente (32) vorgesehen sind.

9. Maschinengestell (10) nach einem oder mehreren der vorangegangenen Ansprüche, **dadurch gekennzeichnet, dass** der Flanschabschnitt (36) wenigstens eine Durchgangsöffnung (46) aufweist, durch die sich das Spannelement (32) im Montagezustand (MS) erstreckt.

10. Maschinengestell (10) nach einem oder mehreren der vorangegangenen Ansprüche, **dadurch gekennzeichnet, dass** das Klemmelement (30) ein Loch (42), vorzugsweise ein Sackloch (42) aufweist, in das das Spannelement (32) im Montagezustand eingreift, vorzugsweise über ein spannelementseitiges Gewinde (50) in ein lochseitiges Gewinde (44) eingreift.

11. Maschinengestell (10) nach einem oder mehreren der vorangegangenen Ansprüche, **dadurch gekennzeichnet, dass** das Trägerelement (18, 20) eine flächige Erstreckung aufweist, die orthogonal zu einer Erstreckung des Stabelements (12) ist.

12. Maschinengestell (10) nach einem oder mehreren der vorangegangenen Ansprüche, **dadurch gekennzeichnet, dass** wenigstens eines der Stabelemente (12) ein Rohr, insbesondere ein Edelstahlrohr, ist.

## Claims

1. A machine frame (10), wherein the machine frame (10) includes a plurality of rod elements (12) with a cylindrically embodied fixation portion (16) and with at least one platelike load-bearing element (18, 20) with openings (17) or recesses for the rod elements (12), and the rod elements (12) are connectable to the load-bearing element (18, 20) by means of one connection device (22) each in a respective opening (17) or recess, in order in an assembled state (MS) to form the machine frame (10), having an axial direction (24) and a radial direction (26), **characterized in that** the connection device (22) includes at least one straining element (32), in particular in the form of a straining screw (32), a clamping element (30) and a cuff element (34) acting in the assembled state (MS) as a clamping collet, and is located in the opening (17) or recess of the load-bearing element (18, 20), and the cuff element (34) is embodied in flangelike fashion and rests with an outer flange portion (36) with a bearing surface (38) axially against the load-bearing element (18, 20), and wherein the cuff element (34), with a radially inner portion (48) forming a collet, surrounds the cylindrically embodied fixation portion (16) of the rod element (12) and in the assembled state (MS) rests in clamping fashion with a contact face (62) on the fixation portion (16), and in the radial direction (26) between the cuff element (34) and a wall (52) of the load-bearing element (18, 20), which wall defines the opening (17) or recess, forms a preferably annular gap (54), which tapers conically in the axial direction (24) toward the outer flange portion (36) of the cuff element (34), and wherein the clamping element (30) is received in the gap (54) and is drawn, by tightening the straining element (32), axially deeper into the gap (54) and as a result the cuff element (34) is pressed with its contact face (62) radially inward against the fixation portion (16) of the rod element (12), as a result of which the connection device (22) is consequently braced between the rod element (12) and the load-bearing element (18, 20) and thus the rod element (12) is also fixed in clamping fashion against the load-bearing element (18, 20).

2. The machine frame (10) of claim 1, **characterized in that** the flange portion (36) is embodied in the form of a circular disk.

3. The machine frame (10) of claim 1 or 2, **characterized in that** a clamping face (52) toward the load-bearing element and defining the gap (54) is embodied cylindrically.

4. The machine frame (10) of one or more of the foregoing claims 1 through 3, **characterized in that** the clamping element (30) rests, with an outer face (56) which is equivalent to the jacket face of a truncated cone or a cylinder, on a clamping face (52), extending concentrically to the outer face (56) and defining the gap (54) and located toward the load-bearing element.

5. The machine frame (10) of one or more of the foregoing claims, **characterized in that** the clamping element (30) rests, with an inner face (58) which is equivalent to the jacket face of a truncated cone or a cylinder, on a clamping face (60) extending concentrically to the inner face (58) and defining the gap (54) and located on the side toward the cuff element.

6. The machine frame (10) of one or more of the foregoing claims, **characterized in that** the gap (54) tapers at an angle (w) of 2° to 10°, preferably 3° to 8°, in particular 3.5° to 6°, in particular 4° to 5°, to the axial direction (24), and preferably that an inner face (58) of the clamping element (30) and a clamping face (60) located toward the cuff element extend at an angle (w) of 2° to 10°, preferably 3° to 8°, in particular 3.5° to 6°, in particular 4° to 5°, to the axial direction (24), as a result of which the tapering of the gap (54) is caused at least partially and in particular entirely.

7. The machine frame (10) of one or more of the foregoing claims, **characterized in that** the cuff element (34) and/or the clamping element (30) has a clamping joint (40) extending from the inside outward.

8. The machine frame (10) of one or more of the foregoing claims, **characterized in that** that multiple straining elements (32) are provided.

9. The machine frame (10) of one or more of the foregoing claims, **characterized in that** the flange portion (36) has at least one through opening (46), through which the straining element (32) extends in the assembled state (MS) .

10. The machine frame (10) of one or more of the foregoing claims, **characterized in that** the clamping element (30) has a hole (42), preferably a blind hole (42), which is engaged in the assembled state (MS) by the straining element (32), preferably via a thread (50) that engages a thread (44) toward the hole.

11. The machine frame (10) of one or more of the foregoing claims, **characterized in that** the load-bearing element (18, 20) has a two-dimensional extent that is orthogonal to an extent of the rod element (12).

12. The machine frame (10) of one or more of the foregoing claims, **characterized in that** at least one of the rod elements (12) is a pipe, in particular a steel pipe.

## Revendications

1. Bâti de machine (10), dans lequel le bâti de machine (10) comporte plusieurs éléments barres (12) avec une partie de fixation (16) cylindrique et au moins un élément de support (18, 20) de préférence du type plaque avec des ouvertures (17) ou des évidements pour les éléments barres (12), dans lequel les éléments barres (12) peuvent être reliés à l'élément de support (18, 20) au moyen de respectivement un dispositif de liaison (22) dans une ouverture (17) respective ou un évidement, afin de former le bâti de machine (10) dans un état de montage (MS), avec une direction axiale (24) et une direction radiale (26), **caractérisé en ce que** le dispositif de liaison (22) comporte au moins un élément de serrage (32), se présentant en particulier sous forme d'une vis de serrage (32), un élément de blocage (30) et un élément manchon (34) agissant comme douille de blocage dans l'état de montage (MS) et est disposé dans l'ouverture (17) ou l'évidement de l'élément de support (18, 20), dans lequel l'élément manchon (34) est du type bride et s'applique avec une partie de bride extérieure (36) avec une surface d'appui (38) de manière axiale contre l'élément de support (18, 20), et dans lequel l'élément manchon (34) entoure avec une partie (48) radialement intérieure formant douille la partie de fixation (16) cylindrique de l'élément barre (12) et s'applique avec blocage dans l'état de montage (MS) avec une surface de contact (62) contre la partie de fixation (16), dans lequel une fente (54), de préférence annulaire, qui s'amincit en forme de coin dans la direction axiale (24) en direction de la partie de bride extérieure (36) de l'élément manchon (34), est formée dans la direction radiale (26) entre l'élément manchon (34) et une paroi (52), délimitant l'ouverture (17) ou l'évidement, de l'élément de support (18, 20), et dans lequel l'élément de blocage (30) est logé dans la fente (54) et est tiré axialement très profondément dans la fente (54) par serrage à bloc de l'élément de serrage (32) et ainsi l'élément manchon (34) est pressé avec sa surface de contact (62) radialement vers l'intérieur contre la partie de fixation (16) de l'élément barre (12), ce qui a pour effet que le dispositif de liaison (22) est par la suite serré entre l'élément barre (12) et l'élément de support (18, 20) et ainsi l'élément barre (12) est également fixé avec blocage contre l'élément de support (18, 20).

2. Bâti de machine (10) selon la revendication 1, **caractérisé en ce que** la partie de bride (36) est en forme de disque circulaire.

3. Bâti de machine (10) selon la revendication 1 ou 2, **caractérisé en ce qu'**une surface de serrage (52) côté élément de support, délimitant la fente (54), est cylindrique.

4. Bâti de machine (10) selon l'une ou plusieurs des revendications précédentes 1 à 3, **caractérisé en ce que** l'élément de blocage (30) s'applique avec une surface extérieure (56), qui correspond à la surface extérieure d'un cône tronqué ou d'un cylindre, contre une surface de serrage (52) côté élément de support s'étendant de manière concentrique par rapport à la surface extérieure (56) et délimitant la fente (54).

5. Bâti de machine (10) selon l'une ou plusieurs des revendications précédentes, **caractérisé en ce que** l'élément de blocage (30) s'applique avec une surface intérieure (58), qui correspond à la surface extérieure d'un cône tronqué ou d'un cylindre, contre une surface de serrage (60) côté élément manchon s'étendant de manière concentrique par rapport à la surface intérieure (58) et délimitant la fente (54).

6. Bâti de machine (10) selon l'une ou plusieurs des revendications précédentes, **caractérisé en ce que** la fente (54) s'amincit selon un angle (w) de 2° à 10°, de préférence de 3° à 8°, en particulier de 3,5° à 6°, en particulier de 4° à 5°, par rapport à la direction axiale (24), de préférence **en ce qu'**une surface intérieure (58) de l'élément de blocage (30) et une surface de serrage (60) côté élément manchon s'étendent selon un angle (w) de 2° à 10°, de préférence de 3° à 8°, en particulier de 3,5° à 6°, en particulier de 4 à 5°, par rapport à la direction axiale (24), ce qui a pour effet que l'amincissement de la fente (54) est provoqué au moins en partie, en particulier complètement.

7. Bâti de machine (10) selon l'une ou plusieurs des revendications précédentes, **caractérisé en ce que** l'élément manchon (34) et/ou l'élément de blocage (30) présentent un joint de serrage (40) s'étendant de l'intérieur vers l'extérieur.

8. Bâti de machine (10) selon l'une ou plusieurs des revendications précédentes, **caractérisé en ce que** plusieurs éléments de serrage (32) sont prévus.

9. Bâti de machine (10) selon l'une ou plusieurs des revendications précédente, **caractérisé en ce que** la partie de bride (36) présente au moins une ouverture de passage (46) à travers laquelle s'étend l'élément de serrage (32) dans l'état de montage (MS).

10. Bâti de machine (10) selon l'une ou plusieurs des revendications précédentes, **caractérisé en ce que** l'élément de blocage (30) présente un trou (42), de préférence un trou borgne (42), dans lequel l'élément de serrage (32) s'insère dans l'état de montage, de préférence s'insère dans un filet (44) côté trou par l'intermédiaire d'un filet (50) côté élément de serrage.

11. Bâti de machine (10) selon l'une ou plusieurs des revendications précédentes, **caractérisé en ce que** l'élément de support (18, 20) présente une étendue plane, qui est perpendiculaire à une étendue de l'élément barre (12) .

12. Bâti de machine (10) selon l'une ou plusieurs des revendications précédentes, **caractérisé en ce qu'**au moins un des éléments barres (12) est un tube, en particulier un tube en acier inoxydable.
